# EUROPÄISCHE PATENTSCHRIFT

(11) **EP 1 140 526 B1**
(45) Veröffentlichungstag und Bekanntmachung des Hinweises auf die Patenterteilung: **19.03.2003**
(21) Anmeldenummer: 99963432.2
(22) Anmeldetag: 08.12.1999
(51) Int. Cl.: B60B 27/02

(54) **FREILAUFNABE**
FREE-WHEELING HUB
MOYEU DE ROUE LIBRE

(30) Priorität: 08.12.1998 DE 19856627
(43) Veröffentlichungstag der Anmeldung: 10.10.2001
(73) Patentinhaber: DT Swiss AG, 2504 Biel (CH)
(72) Erfinder: SPAHR, Stefan, CH-2543 Lengnau (CH); JÄGER, Gerrit, CH-2603 Péry (CH)
(74) Vertreter: Wallinger, Michael, Dr.
(86) Internationale Anmeldenummer: EP9909650
(87) Internationale Veröffentlichungsnummer: WO00034057

(56) Entgegenhaltungen:
- EP-A- 0 791 482
- DE-A- 3 302 267
- DE-U- 9 419 357
- DE-U- 29 601 861
- US-A- 4 580 670
- US-A- 5 676 228

## Beschreibung

Die vorliegende Erfindung betrifft eine Freilaufnabe, welche insbesondere für Fahrräder geeignet ist. Dies ist aber nicht der einzig mögliche Einsatz, solche Freilaufnaben können auch z. B. als Antrieb für Rollstühle und andere muskelbetriebene oder nicht muskelbetriebene Fahrzeuge und Geräte verwendet werden. Aus Gründen der Vereinfachung wird die Erfindung aber nachfolgend ausschließlich in bezug auf ihren Einsatz bei Fahrrädern beschrieben, wobei diese Beschreibung nicht für den Anmeldungsbereich einschränkend sein soll.

Freilaufnaben für Fahrräder werden häufig mit einem Klinkenfreilauf ausgeführt, bei welchem beweglich gelagerte Klinken zwischen zwei rotierenden Teilen angeordnet sind und in einer Drehrichtung eine formschlüssige Verbindung zwischen diesen beiden Teilen bewirken und in der anderen Drehrichtung, der Leerlaufrichtung, sich in eine Position bewegen, in der keine Kraftübertragung zwischen den rotierenden Teilen stattfindet.

Insbesondere, aber nicht nur im hochsportlichen Bereich, sind die Anforderungen an solche Freilaufnaben sehr hoch.

Auf der einen Seite soll die Freilaufnabe auch hohe Kräfte sicher aufnehmen, auf der anderen Seite muß sie, auch über längere Zeiträume, zuverlässig arbeiten. Weiterhin muß die in der Nabe entstehende Reibung, sowohl im Antriebsbereich als auch im Leerlaufbereich, möglichst gering sein.

Im professionellen und semiprofessionellen Sportbereich ist es üblich, derartige Naben vor jedem oder fast jedem Einsatz zu warten. Es ist deshalb weiterhin erforderlich, daß die Nabe leicht zerlegt und wieder zusammengebaut werden kann.

Aus der US 5,676,228 A ist eine Nabe gemäß dem Oberbegriff des Anspruchs 1 bekannt geworden.

Mit der DE 33 02 267 A1 wurde eine Nabe für Fahrräder offenbart, bei der Rillenkugellager zur Lagerung des Nabengehäuses gegenüber der Nabenachse vorgesehen sind. Zur Abdichtung der Nabe ist unter anderem eine Labyrinthdichtung vorgesehen.

Mit der US 4,580,670 ist eine Fahrradnabe offenbart worden, bei der ein Klinkenfreilauf vorgesehen ist.

Der vorliegenden Erfindung liegt die Aufgabe zugrunde, eine Freilaufnabe, insbesondere für ein Fahrrad zur Verfügung zu stellen, welche höchsten Belastungen standhält, geringe Reibungswerte aufweist, betriebssicher arbeitet und leicht gewartet werden kann.

Diese Aufgabe wird erfindungsgemäß durch den Gegenstand des Anspruchs 1 gelöst.

Zu bevorzugende Weiterbildungen der Erfindung sind Gegenstand der Unteransprüche.

Die vorliegende Erfindung stellt eine Fahrradnabe mit hoher Funktionssicherheit und Haltbarkeit zur Verfügung, welche einfach zu warten ist und bei welcher im Falle der Kraftübertragung eine zuverlässige, haltbare und formschlüssige Verbindung erreicht wird, während z. B. bei einer Talfahrt, wenn die Tretkurbeln stillstehen, die Reibungsverluste klein sind.

Die erfindungsgemäße Nabe weist eine Nabenachse, ein konzentrisch dazu angeordnetes hohles Nabengehäuse, einen konzentrisch zur Nabenachse angeordneten Rotor, an welchem wenigstens ein Zahnrad angeordnet werden kann, und eine Sperrklinken-Freilaufeinrichtung auf.

Zur Lagerung der einzelnen Komponenten werden Wälzlager eingesetzt. Die Wälzkörper eines bzw. jedes Wälzlagers sind in einem vorbestimmten Abstand zueinander aufgerichtet. Vorzugsweise werden z. B. nach DIN oder ISO normierte bzw. industriell hergestellte Wälzlager verwendet. Mit solchen Wälzlagern kann eine aufwendige und fehleranfällige Einstellung des Lagerspiels unterbleiben. In der Fahrradbranche sind solche Wälzlager auch unter dem Begriff "Industrielager" bekannt, da solche Lager üblicherweise industriell und genormt hergestellt werden.

Der Einsatz Wälzlager oder Industrielager zur Lagerung hat große Vorteile, da üblicherweise der Qualitätsstandard solcher industriell gefertigter Lager durch die hohe Stückzahl bedingt sehr hoch ist. Bei eventuellem Verschleiß eines Lagers kann das defekte Lager einfach und schnell ausgetauscht werden. Durch den Einsatz genormter Lager ist es nahezu auf der ganzen Welt möglich, hochqualitativen Ersatz schnell und kostengünstig zu erhalten.

Weiterhin weist die Nabe eine mit Sperrklinken versehene Freilaufeinrichtung auf, welche derart gestaltet ist, daß ein Drehmoment dieses Rotors in Vorwärtsfahrtrichtung auf das Nabengehäuse übertragen wird, wobei die Freilaufeinrichtung im wesentlichen radial aufgebaut ist, so daß durch eine Stellungsveränderung der Sperrklinken ein Kraft- bzw. Formschluß zwischen Rotor und Nabengehäuse erzielt wird.

Der Rotor der erfindungsgemäßen Nabe ist gegenüber dem Nabengehäuse mit wenigstens zwei Rillenkugellagern oder wenigstens einem Nadellager drehbar gelagert.

Die erfindungsgemäße Nabe hat viele Vorteile.

Durch die Verwendung derartiger Wälzlager, bei denen die Wälzkörper eines Lagers in einem vorbestimmten Abstand zueinander angeordnet sind, wird eine hohe Zuverlässigkeit und Haltbarkeit der erfindungsgemäßen Nabe erzielt. Gerade dadurch, daß die einzelnen Wälzkörper einen bestimmten, meist festen Abstand zueinander aufweisen, wird ein zufälliger und reibender Kontakt der einzelnen Wälzkörper vermieden, der zu erhöhten Verschleiß und sogar Zerstörung der Wälzkörper führen kann. Mit zunehmenden Verschleiß weicht die äußere Form von Wälzkörpern möglicherweise von der idealen Form ab, was auf den Laufflächen zu Rissen und Riefen führen kann, die unter Umständen die gesamte Nabe zerstören können.

Durch den Einsatz von Wälzlagern, die vorzugsweise einen Innenring und einen Außenring aufweisen, zwischen denen Kugeln, Zylinder, Kegel oder Nadeln üblicherweise in einem Käfig gehalten werden, wird eine besonders hohe Zuverlässigkeit und Haltbarkeit der erfindungsgemäßen Nabe erzielt.

Industriell hergestellte Wälzlager gewährleisten eine hohe Qualität und Haltbarkeit. Bei Verwendung von Wälzlagern mit Innen- und Außenring führt eine Zerstörung der Wälzkörper üblicherweise nicht zu einer weitergehenden Zerstörung der Nabe, da durch Austausch des kompletten Wälzlagers auch die innere und äußere Lauffläche für die Wälzkörper ausgetauscht werden. Bei herkömmlichen Fahrradnaben dient oft ein kegelförmiger Abschnitt auf der Nabenachse als innere Lauffläche für die Wälzkörper, während die äußere Lauffläche im Nabengehäuse gebildet wird. Werden durch Überschreiten der Lebensdauer oder durch Eindringen von Staub die Wälzkörper zerstört, so kann die gesamte Nabe unbrauchbar werden.

In einer weiteren bevorzugten Ausgestaltung der erfindungsgemäßen Fahrradnabe weist die Nabe eine hohle Nabenachse auf, die im Unterschied zu konventionellen Nabenachsen derart gestaltet ist, daß das Verhältnis bzw. die Differenz von Außen- und Innendurchmesser klein ist bzw., daß die Wandstärke der hohlen Nabenachse relativ gering ist, bevorzugterweise zwischen 0,5 und 3 mm und besonders bevorzugt zwischen 1,7 und 2, 3 mm bei etwa 2 mm liegt.

In einer weiteren bevorzugten Weiterbildung der erfindungsgemäßen Fahrradnabe werden wenigstens an einer Lagerstelle zwei benachbart angeordnete Wälzlager verwendet, anstatt des in konventionellen Fahrradnaben üblichen einen Wälzlagers. Die Verwendung von zwei Wälzlagern an Stellen, wo üblicherweise nur ein Wälzlager verwendet wird, hat den Vorteil, daß die Belastungen der einzelnen Lager kleiner sind und somit Lager mit kleinerem Außendurchmesser verwendet werden, als wenn an der Stelle nur ein Lager verwendet wird. Eine Verringerung des Außendurchmessers der Lager führt zu einem geringeren Materialvolumen und somit Gesamtgewicht der Nabe. Dies ist insbesondere, aber nicht nur, im Sportbereich sehr wichtig.

Die Verwendung einer derartigen hohlen Nabenachse oder der Einsatz von zwei Wälzlagern an Stellen, wo üblicherweise nur ein Wälzlager eingesetzt wird, ist ausführlich in der parallelen Anmeldung des gleichen Anmelders (EP 1149000 A) beschrieben, die am gleichen Tage beim Europäischen Patentamt eingereicht worden ist und eine Fahrradnabe beschreibt.

Weiterhin ist es möglich, eines oder mehrere der zur Lagerung verwendeten Wälzlager schwimmend und insbesondere axial schwimmend zu lagern, wobei die Paßgenauigkeit der schwimmenden Lagerung zwischen 0,02 und 0,5 mm, vorzugsweise zwischen 0,05 und 0,15 und besonders bevorzugt etwa 0,1 mm beträgt. Wenn zwei benachbarte Wälzlager zur Lagerung eingesetzt werden, wird besonders bevorzugt eines der beiden schwimmend gelagert.

Vorzugsweise wird wenigstens auf einer Seite der Nabe wenigstens ein Lager schwimmend gelagert, und besonders bevorzugt werden die von der Nabenmitte aus gesehen äußeren Wälzlager schwimmend gelagert, um dauerhafte Verspannungen im Lager zu vermeiden.

In einer bevorzugten Weiterbildung der erfindungsgemäßen Fahrradnabe weist wenigstens eines der vorgefertigten Wälzlager Dichtungen zum Schutz vor Staub bzw. Wasser auf. Bevorzugterweise sind die Wälzlager zur Lagerung des Nabengehäuses und des Rotors in bezug auf die Nabenachse mit Dichtungen zum Schutz vor Staub und/oder Wasser ausgerüstet, und besonders bevorzugt sind alle eingesetzten Wälzlager mit Dichtungen für Staub und Wasser ausgerüstet. Besonders bevorzugt werden genormte, abgedichtete Wälzlager eingesetzt.

Vorzugsweise werden im wesentlichen wartungsfreie Wälzlager eingesetzt. Der Einsatz von wartungsfreien und/oder abgedichteten Wälzlagern ist besonders vorteilhaft, da die Lebensdauer der Lager erhöht wird und die Nabe dem Benutzer zuverlässiger zur Verfügung steht.

In einer vorteilhaften Weiterbildung der erfindungsgemäßen Nabe ist ein bzw. sind alle eingesetzten Wälzlager Rillenkugellager, die gemäß einen vorigen Weiterbildung als wartungsfreie und abgedichtete Rillenkugellager ausgeführt sein können. Der Einsatz von Rillenkugellagern ist besonders vorteilhaft, da diese Kugellager neben Radial- auch Axialkräfte aufnehmen können.

In einer anderen bevorzugten Weiterbildung der erfindungsgemäßen Nabe werden neben Rillenkugellagern auch ein oder mehrere Nadellager eingesetzt.

Zur Lagerung des Nabengehäuses und des Rotors in bezug auf die Nabenachse werden Rillenkugellager eingesetzt, während zur Lagerung des Rotors in bezug auf das Nabengehäuse ein oder zwei Rillenkugellager oder auch ein oder zwei Nadellager eingesetzt werden. Diese Lager zur Lagerung des Rotors in bezug auf das Nabengehäuse können einen Innen- und Außenkranz oder nur einen Innen- oder einen Außenkranz oder nur einen Kugelkäfig bzw. einen sogenannten Nadelkranz aufweisen, um die Bauhöhe in radialer Richtung möglichst klein zu halten.

Besonders, aber nicht nur, bei Einsatz von Nadelkränzen ist es möglich, den radialen Platzbedarf für das Lager klein zu halten. Dies ist besonders vorteilhaft, da ein kleinerer Durchmesser dieses Lagers zu einem kleineren (Material-) Volumen und somit einem kleineren Gewicht der gesamten Nabe führt.

In einer bevorzugten Weiterbildung der erfindungsgemäßen Fahrradnabe ist eine Freilaufträgereinrichtung vorgesehen, die mit dem Nabengehäuse fest verbunden ist. Das Nabengehäuse ist aus Metall, bevorzugterweise aus Leichtmetall und besonders bevorzugt aus einer Aluminiumlegierung oder einem ähnlichen Leichtmetall gefertigt. Die Freilaufträgereinrichtung ist ein separates Bauteil, welches vorzugsweise ebenfalls aus Metall, Leichtmetall, einer Aluminiumlegierung, aber besonders bevorzugt aus gehärtetem Stahl oder ähnlichem gefertigt ist. Der Rotor besteht aus Metall, bevorzugterweise aus Leichtmetall bzw. einer Aluminiumlegierung. Für besonders hohe Belastungen, wie sie z. B. bei Tandems auftreten, kann der Rotor auch aus Stahl bzw. gehärtetem Stahl gefertigt sein.

In einer bevorzugten Weiterbildung ist die Freilaufträgereinrichtung im wesentlichen zylindrisch geformt und weist eine durchgehende Bohrung auf. An dem zum Nabengehäuse ausgerichteten Ende weist die Freilaufträgereinrichtung in einem Querschnitt senkrecht zur Nabenachse ein polygonartiges Außenquerschnittsprofil auf. An diesem Ende ist der Außendurchmesser dieser Freilaufeinrichtung abhängig vom Umfangswinkel. In Achsrichtung auf das Ende der Freilaufträgereinrichtung gesehen kann dieses ein zahnradähnliche Form aufweisen, deren Zähne oder Zacken spitz oder rund oder sinusförmig gestaltet sind. Besonders bevorzugt werden mehrere, insbesondere 9 radiale Ausbuchtungen symmetrisch über den Umfangswinkel verteilt angeordnet.

Bevorzugterweise weist das Nabengehäuse an einem Abschnitt auf der Seite des Rotors in einem Querschnitt senkrecht zur Nabenachse eine polygonartig geformte Aussparung auf, die zur im wesentlichen formschlüssigen Aufnahme des polygonartig geformten Endes der Freilaufträgereinrichtung dient. Je nach Gestaltung des polygonartigen Endes der Freilaufträgereinrichtung ist die Aussparung in dem Nabengehäuse gestaltet, so daß eine drehfeste und im wesentlichen spielfreie und formschlüssige Verbindung zwischen Freilaufträgereinrichtung und Nabengehäuse möglich ist.

In einer weiteren bevorzugten Ausbildung der erfindungsgemäßen Nabe ist eine Schraubeinrichtung vorgesehen, die eine Schraube beinhaltet, welche eine durch Schraubenkopf und Schraubenschaft durchgehende Bohrung aufweist. Wenigstens am vom Schraubenkopf abgewandten Ende des Schraubenschafts ist auf dem Schraubenschaft ein (Außen-) Gewinde vorgesehen, welches mit einem (Innen-) Gewinde der Freilaufträgereinrichtung auf der der Nabenmitte zugewandten Seite verschraubbar ist. Zur Montage wird die Freilaufträgereinrichtung in das Nabengehäuse eingeschoben. Durch die polygonartigen Außen- und Innenprofile der Freilaufträgereinrichtung und des Nabengehäuses entsteht eine drehfeste und formschlüssige Verbindung von Freilaufträgereinrichtung und Nabengehäuse. Von der der Freilaufträgereinrichtung abgewandten Seite des Nabengehäuses wird durch dessen hohles Zentrum die Schraube der Schraubeinrichtung eingeführt und durch eine dem Schraubenschaftdurchmesser entsprechende Bohrung in dem Nabengehäuse in die Freilaufträgereinrichtung eingeführt und die Schraube wird mit der Freilaufträgereinrichtung verschraubt. Der Schraubenkopf liegt im erfindungsgemäßen Zusammenbau an einem Absatz im Nabengehäuse an, so daß eine kraftschlüssige Verbindung in axialer Richtung zwischen Freilaufträgereinrichtung und Nabengehäuse vorliegt.

Der Schraubenkopf weist Aussparungen oder Vorsprünge auf, damit er mit einem Werkzeug gedreht werden kann.

In einer weiteren bevorzugten Weiterbildung der erfindungsgemäßen Nabe umfaßt die Freilaufeinrichtung wenigstens eine Sperrklinke, die auf der Freilaufträgereinrichtung angeordnet ist und zum Zwecke der Drehmomentübertragung in eine Nut oder eine entsprechende Verzahnung auf der Innenumfangsoberfläche des Rotors eingreift. Bevorzugterweise ist die Verzahnung des Rotors derart gestaltet, daß, in Umfangsrichtung gesehen, jeder Zahn der Verzahnung eine langsam ansteigende Flanke aufweist, welche an der Spitze des Zahns dann steil abfällt.

Wenn Drehmoment übertragen wird, greifen die vorzugsweise zwei, drei oder vier oder auch mehr Sperrklinken der Freilaufträgereinrichtung in die Verzahnung des Rotors ein und übertragen von der steilen Flanke der Verzahnung das Antriebsdrehmoment auf die Freilaufträgereinrichtung und von dort auf das Nabengehäuse. Wenn beim Fahren die Tretkurbeln stillstehen, gleiten die Sperrklinken über die flachen Flanken der Verzahnung, und es wird kein Drehmoment übertragen.

Bevorzugterweise sind auf einem zentralen Abschnitt der Freilaufträgereinrichtung in Umfangsrichtung verteilt wenigstens eine der Klinkenzahl entsprechende Anzahl von Vertiefungen angeordnet, die zur Aufnahme der Sperrklinken dienen, und welche vorzugsweise kreis- oder zylinderförmig geformt sind.

Die Sperrklinken weisen ein entsprechend geformtes Ende auf und sind in den entsprechenden Vertiefungen derart angeordnet, daß sie mit ihrem zweiten eingreifenden Ende in die Verzahnung auf der Innenumfangsoberfläche des Rotors eingreifen können.

Der zentrale Abschnitt der Freilaufträgereinrichtung, auf welchem die Freilaufeinrichtung angeordnet ist, weist bevorzugterweise eine Nut in Umfangsrichtung auf, in welcher eine Ringfeder angeordnet ist, welche die Freilaufelemente oder Sperrklinken derart belastet, daß die Eingriffsenden der Sperrklinken aufgerichtet werden, um sie in Eingriff mit der Verzahnung des Rotors bringen. Bevorzugterweise ist die Feder als Q-Feder ausgeführt und umschließt die Freilaufträgereinrichtung mit einem Winkel von mehr als 360°. An einem Ende der ring- bzw. Q-förmigen Feder kann ein kleines Endstück um 90° umgebogen sein, welches dann im bestimmungsgemäßen Zusammenbau der Nabe im wesentlichen parallel zur Achse ausgerichtet ist und gegebenenfalls in eine axiale Ausbuchtung der Freilaufträgereinrichtung hineinragt, um sie in Umfangsrichtung zu fixieren. Auch der Einsatz einer C-förmigen Feder ist möglich.

Benachbart zu diesem zentralen Abschnitt der Freilaufträgereinrichtung in Richtung auf das Nabengehäuse kann ein zylindrischer Bereich größeren Durchmessers an der Freilaufträgereinrichtung angeordnet sein, auf welchem wenigstens ein Wälzlager angeordnet ist, um den die Freilaufträgereinrichtung umgebenden Rotor in Bezug auf die Freilaufträgereinrichtung und somit das Nabengehäuse drehbar zu lagern.

Bevorzugterweise ist nahe dem, dem Nabengehäuse abgewandten, Ende des Rotors ein Wälzlager im wesentlichen zwischen dem Rotor und der Nabenachse angeordnet, um den Rotor in Bezug auf die Nabenachse drehbar zu lagern.

Eine solche Lagerungsanordnung, bei welcher der Rotor auf der einen Seite der Freilaufeinrichtung gegenüber dem Nabengehäuse und auf der anderen Seite der Freilaufeinrichtung gegenüber der Nabenachse drehbar gelagert ist, ist besonders vorteilhaft, da auch bei großen Drehmomentbelastungen des Rotors, z. B. bei Bergfahrten eine stärkere Durchbiegung des Rotors gegenüber dem Nabengehäuse bzw. der Freilaufträgereinrichtung nahezu ausgeschlossen ist. Eine solche Durchbiegung kann eine einseitige Belastung der Freilaufelemente bzw. der Sperrklinken der Freilaufeinrichtung hervorrufen, die dadurch einem stark erhöhten Verschleiß unterliegen.

Mit einer solch stabilen Lagerung ist es im wesentlichen immer gewährleistet, daß ein auf den Rotor übertragenes Drehmoment zuverlässig auf das Nabengehäuse übertragen wird. Bei größerer Durchbiegung des Rotors in Bezug auf das Nabengehäuse und/oder auf die Freilaufeinrichtung kann es sonst passieren, daß, insbesondere bei Kurvenfahrten, die Freilaufelemente oder die Sperrklinken der Freilaufeinrichtung kein Drehmoment auf das Nabengehäuse übertragen können.

Die erfindungsgemäße Nabe hat u. a. den Vorteil, ein Drehmoment des Rotors in nahezu allen denkbaren Fahrsituationen zuverlässig zu übertragen.

Bevorzugterweise ist an der, der Nabenmitte abgewandten Seite der Freilaufträgereinrichtung, ein Wälzlager angeordnet, um die Freilaufeinrichtung in Bezug auf die Nabenachse drehbar zu lagern.

In einer bevorzugten Weiterbildung der erfindungsgemäßen Nabe sind die Wälzlager zur Lagerung des Rotors gegenüber der Achse und zur Lagerung der Freilaufeinrichtung in Bezug auf die Nabenachse benachbart angeordnet und vorzugsweise nur durch eine Art Unterlegscheibe, einen Federring oder dgl. getrennt.

In einer bevorzugten Weiterbildung der erfindungsgemäßen Nabe ist die Nabe im wesentlichen ohne Verwendung von Werkzeug zerlegbar und es ist weiterhin möglich, den Rotor ebenfalls bevorzugterweise ohne Verwendung von Werkzeug mit der Hand von der Nabe abzuziehen bzw. zu entfernen.

In dieser bevorzugten Weiterbildung der Erfindung werden auf beide Endseiten der Nabenachse Endsicherungselemente aufgebracht, die auf die Nabenachse aufgeschraubt oder auch nur aufgesteckt sein können.

Falls die Nabenendsicherungselemente aufgeschraubt werden, weisen sie vorzugsweise ein Innengewinde auf und die Endstücke der Nabenachse haben ein Außengewinde. Zur Demontage der Nabe kann dann vorzugsweise ein Werkzeug verwendet werden, um diese Nabenendsicherungselemente abzuschrauben.

Falls die Nabenendsicherungselemente aufgesteckt sind, können diese von Hand abgezogen werden.

Die weitere Demontage der Nabe kann immer im wesentlichen ohne Werkzeug erfolgen. Der Rotor ist bevorzugterweise in allen Ausführungsformen mit der Hand abziehbar und somit ist der vom Rotor umschlossene Innenraum, wie z. B. die Freilaufeinrichtung für Säuberungs- und Wartungsarbeiten leicht und einfach zugänglich. Besonders vorteilhaft ist dabei, daß nach Abzug des Rotors keine Wälzkörper wie z. B. Kugeln oder auch Sperrklinken aus der Nabe herausfallen können.

In einer bevorzugten Weiterbildung der erfindungsgemäßen Nabe ist auf der rechten Seite des Nabengehäuses, auf der der Rotor angeordnet ist, ein Nabenendsicherungselement in Form eines rechten Adapterrings mit einer vorzugsweise V-förmigen Dichtungseinrichtung auf die Nabenachse aufgeschoben, wobei sich ein Ende bzw. eine Dichtwandung der V-förmigen Dichtungseinrichtung an einer Staubschutzscheibe des Rotors abstützt, die vorzugsweise an das Wälzlager zur Lagerung des Rotors auf der Nabenachse angrenzt.

Auf der linken Seite des Nabengehäuses ist vorzugsweise ein Nabenendsicherungselement in Form eines linken Adapterrings mit einer ebenfalls vorzugsweise V-förmigen Dichtungseinrichtung auf die Nabenachse aufgeschoben. Ein Ende der V-förmigen Dichtungseinrichtung stützt sich an dem Nabengehäuse und/oder einem Wälzlager, welches zur Lagerung des Nabengehäuses gegenüber der Nabenachse auf der linken Seite dient, ab, um Eindringen von Staub und/oder Wasser in das innere der Nabe zu verhindern.

Weiterhin ist vorzugsweise an der rechten Innenseite des Nabengehäuses, auf der Seite, an welcher der Rotor angeordnet ist, entlang der Innenumfangsoberfläche des Nabengehäuses eine ringförmige Vertiefung oder Nut angeordnet, welche in einem Querschnitt parallel zur Nabenachse eine abgerundete Form aufweist, die derart gestaltet ist, daß der Durchmesser am rechten Ende des Nabengehäuses kleiner ist als der maximale Durchmesser dieser Vertiefung.

Vorzugsweise ist im wesentlichen zwischen dem Rotor und dem Nabengehäuse eine Dichtungseinrichtung angeordnet, welche vorzugsweise wenigstens teilweise aus einem elastischen Material besteht und welche den Eintritt von Schmutz und/oder Wasser in diese Nabe weitgehend verhindert.

Diese Dichtungseinrichtung ist vorzugsweise auf einer Außenfläche des Rotors angeordnet. Besonders bevorzugt ist diese Dichtungseinrichtung im einem Bereich der ringförmigen Vertiefung des Nabengehäuses angeordnet und derart gestaltet, daß eine Belastung von außen eine Erhöhung der Dichtungswirkung hervorruft.

Eine solche Gestaltung ist besonders vorteilhaft, da die Dichtungswirkung mit zunehmender Belastung stärker wird und so eine effektivere Dichtungswirkung möglich wird, ohne die Reibungsverluste im Normalbetrieb zu erhöhen.

Gemäß einer weiteren bevorzugten Weiterbildung der erfindungsgemäßen Nabe ist die Dichtungseinrichtung zwischen Rotor und Nabengehäuse V-förmig gestaltet und derart angeordnet, daß die Spitze der V-förmigen Dichtungseinrichtung zur Nabenmitte ausgerichtet ist, so daß die Öffnung des V's nach außen zeigt.

Bevorzugterweise liegt eine erste Dichtwandung der zwischen Rotor und Nabengehäuse angeordneten V-förmigen Dichtung an dem Rotor an, und die zweite Dichtwandung ragt in die ringförmige Vertiefung des Nabengehäuses hinein und kann die ringförmige Vertiefung berühren.

Eine solche Gestaltung hat erhebliche Vorteile, da die Dichtung bei Belastung durch Spritzwasser von außen ihre Dichtwirkung automatisch verstärkt, da die beiden Dichtwandungen der bevorzugterweise wenigstens teilweise aus elastischen Material bestehenden V-förmigen Dichtungen auseinandergedrückt werden und somit die zweite Dichtwandung dann gegen die ringförmige Vertiefung im Nabengehäuse gedrückt oder gepreßt wird.

Dadurch wird eine Erhöhung der Dichtwirkung dieser Dichteinrichtung erzielt, während im Normalzustand die Reibungsverluste durch die Dichtung klein gehalten werden.

In einer bevorzugten Weiterbildung aller bisher beschriebenen Weiterbildungen weist wenigstens eine der Dichtungseinrichtungen eine zusätzliche Labyrinthdichtung auf, welche vorzugsweise einer elastischen Dichtungseinrichtung vorgeschaltet sein kann.

Besonders bevorzugt wird eine zusätzliche Labyrinthdichtung auf der linken Nabenseite bei der Dichtungseinrichtung zwischen Nabenachse und Nabengehäuse eingesetzt; eine zusätzliche Labyrinthdichtung kann jedoch auch auf der rechten Nabenseite bei der Dichtungseinrichtung von Nabenachse gegenüber Rotor und bei der zuletzt beschriebenen Dichtungseinrichtung zwischen Rotor und Nabengehäuse angeordnet sein.

Die weitere Ausgestaltung einer erfindungsgemäßen Nabe schließt Merkmale mit ein, wie sie in Anmeldungen desselben Anmelders mit der Anmeldenummer DE 197 31 451.1, eingereicht beim Deutschen Patentamt am 22.07.1997, oder unter der Anmeldenummer DE 198 47 373.6, eingereicht beim Deutschen Patentamt am 15.10.1998, beschrieben worden sind. Besonders bevorzugt ist die Gestaltung wenigstens einer oder mehreren Dichtungseinrichtungen, wie sie in der DE 197 31 451.1 vom selben Anmelder mit Bezug auf die Figuren 1, 2a und 2b beschrieben werden.

Weitere Vorteile, Merkmale und Anwendungsmöglichkeiten der vorliegenden Erfindung ergeben sich aus den nachfolgenden Beschreibungen von Ausführungsbeispielen mit den Zeichnungen.

Darin zeigt:
- Figur 1: ein erstes Ausführungsbeispiel eine erfindungsgemäße Nabe im Schnitt;
- Figur 2a: einen Halbschnitt des Nabengehäuses des Ausführungsbeispiel gemäß Figur 1;
- Figur 2b: einen Schnitt A-A durch das Nabengehäuse gemäß Figur 2a;
- Figur 3: einen Schnitt durch den Rotor des Ausführungsbeispiel gemäß Figur 1;
- Figur 4a: einen Schnitt durch die Freilaufträgereinrichtung des Ausführungsbeispiels gemäß Figur 1;
- Figur 4b: eine Aufsicht der Freilaufträgereinrichtung des Ausführungsbeispiels gemäß Figur 1;
- Figur 5: den linken Adapterring gemäß dem Ausführungsbeispiel gemäß Figur 1;
- Figur 6: die Dichtungseinrichtung zwischen Rotor und Nabengehäuse des Ausführungsbeispiels gemäß Figur 1; und

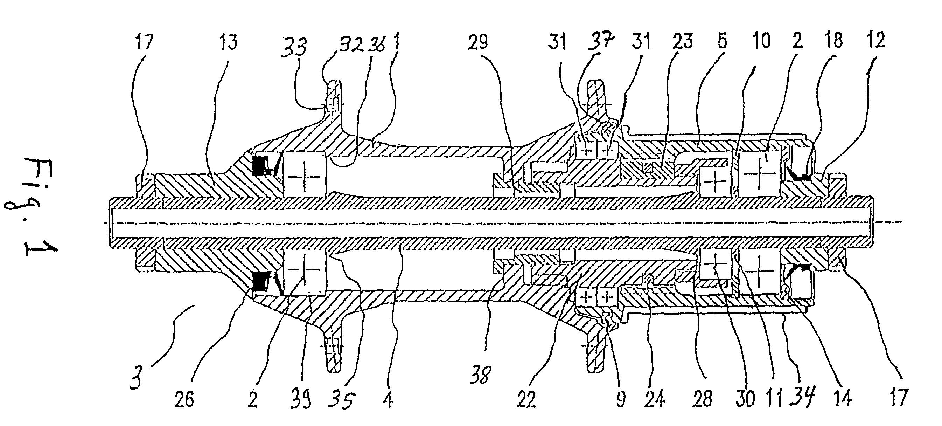

In Figur 1 ist ein erstes Ausführungsbeispiel einer erfindungsgemäßen Nabe 3 im Schnitt dargestellt. Die Nabe weist eine Nabenachse 4, ein Nabengehäuse 1 und einen Rotor 5 auf. Das Nabengehäuse ist mit Flanschen 32 versehen, welche Bohrungen 33 zur Aufnahme von Speichen aufweisen.

Bei praktisch allen Fahrrädern ist das Ritzel für den Antrieb bzw. das Ritzelpaket für eine Kettenschaltung an der in Fahrtrichtung rechten Seite des Rades angeordnet. Dementsprechend wird hier im folgenden auch vom linken und vom rechten Teil der Nabe gesprochen, wobei die Orientierung der Figur 1 entspricht.

Das mit einer durchgehenden Bohrung versehene Nabengehäuse 1 weist in einem linken Bereich eine zur Nabenachse 4 konzentrische Bohrung auf, in der an einem Absatz 36 im Nabengehäuse ein Lagersitz 39 angeordnet ist. Der Lagersitz dient zur Aufnahme eines Rillenkugellagers 2, welches zur Nabenmitte hin durch den Absatz 36 im Nabengehäuse axial abgestützt wird. Die innere Lauffläche des Rillenkugellagers 2 ist auf der Nabenachse 4 angeordnet und wird axial nach rechts durch einen Absatz 35 auf der Nabenachse abgestützt.

Links neben dem Rillenkugellager 2 in der linken Nabenhälfte ist ein linkes Nabenendsicherungselement in der Form eines linken Adapterrings 13 angeordnet, der zur Anpassung an verschiedene Fahrradrahmentypen ausgewechselt werden kann. Eine zylindrische Fläche im rechten Endbereich des linken Adapterrings dient zur Aufnahme eines V-förmigen Dichtringes 26 aus einem elastischen Material, um den Zutritt von Wasser und Staub zum Nabengehäuse zu verhindern. Dem Dichtring 26 ist eine Labyrinthdichtung bzw. ein Dichtspalt zwischen Adapterring 13 und Nabengehäuse 1 vorgeschaltet.

Der V-förmige Dichtring 26 weist zwei Dichtwandungen oder Dichtungsbereiche auf, von denen die zur Nabenmitte hin ausgerichtete Dichtwandung derart schlank gestaltet ist, daß das Verhältnis aus ihrer radialen Länge zu ihrer axialen Dicke größer 2 ist. Die zur Nabenmitte hin ausgerichtete Dichtwandung endet in einem Bereich nahe dem Nabengehäuse und dem Rillenkugellager 2 und berührt den äußeren Laufring des Rillenkugellagers 2.

Am linken Ende der Nabenachse ist in diesem Ausführungsbeispiel an einem Achsenendstück eine Rändeischeibe 17 aufgeschraubt, um den linken Adapterring zuverlässig auf der Nabenachse zu halten.

Auf der rechten Nabenseite ist ein Klinkenträger 22 angeordnet, welcher mit einer Schraube 29 in fester Verbindung mit dem Nabengehäuse 1 steht.

Bei der Montage wird von rechts der Klinkenträger 22 in das Nabengehäuse eingeführt, und von links wird die Schraube 29 durch die Bohrung im Nabengehäuse 1 hindurchgesteckt und das Außengewinde der Schraube 29 wird mit dem Innengewinde des Klinkenträgers 22 auf der linken Seite des Klinkenträgers verschraubt. Der Schraubenkopf der Schraube 29 stützt sich gegen einen Absatz 38 im Nabengehäuse 1 ab.

In einem linken Bereich des Klinkenträgers 22 sind zwei baugleiche Rillenkugellager 31 benachbart angeordnet, um den Rotor 5 in bezug auf den Klinkenträger 22 drehbar zu lagern.

In einem Bereich rechts der Rillenkugellager 31 sind über den Umfang verteilt Sperrklinken 23 symmetrisch verteilt, welche mit Nuten im Rotor 5 in Eingriff stehen können, um ein Drehmoment des Rotors auf den Klinkenträger und somit das Nabengehäuse zu übertragen.

Im Bereich der Sperrklinken 23 ist eine zentral bzw. mittig ringförmige Feder 24 angeordnet, die mit einem Winkel von mehr als 360° den Klinkenträger mit den darauf befindlichen Sperrklinken umschließt und die Sperrklinken 23 derart belastet, daß das freie Ende der Sperrklinken 23 aufgerichtet wird und in eine Eingriffsstellung mit den Nuten im Rotor gelangt.

Rechts von den Sperrklinken 23 ist an einem Bereich des Sperrklinkenträgers ein Ring 28 auf den Sperrklinkenträger 22 geschraubt. Der Ring 28 weist einen inneren Lagersitz auf, in dem ein Rillenkugellager 30 angeordnet ist, um den Sperrklinkenträger in bezug auf die Nabenachse drehbar zu lagern. Zur axialen Fixierung weist die Nabenachse in dem Lagersitzbereich einen Absatz entsprechend dem Absatz 35 auf der linken Nabenseite auf. An das Rillenkugellager 30 schließt sich eine Scheibe 11 und ein weiteres Rillenkugellager 2 an, welches den Rotor in bezug auf die Nabenachse drehbar lagert. Eine konzentrisch zur Scheibe 11 angeordnete Scheibe bzw. ein Sicherungselement 10 sichert die äußeren Lagerschalen der Rillenkugellager 2 und 30 auf der rechten Seite vor einer axialen Verschiebung.

Zum Schutz vor Staub und Wasser schließt sich an das Rillenkugellager 2 auf der rechten Nabenseite eine Staubschutzscheibe 14 und ein rechter Adapterring 12 an, welcher ebenfalls einen zylindrischen Bereich aufweist, auf welchem ein im wesentlichen ebenfalls V-förmiger Dichtungsring 18 angeordnet ist. Die Öffnung des V des Dichtungsrings 18 weist ebenso wie die Öffnung des V des Dichtungsrings 26 radial nach außen. Die zur Nabenmitte hin ausgerichtete Dichtwandung des Dichtrings endet im berührenden Kontakt mit der Staubschutzscheibe 14.

Auf der rechten Nabenseite bildet eine Riffel- oder Rändelscheibe 17 den Abschluß der Nabenachse, die auf einen Endbereich aufgeschraubt ist.

In einer anderen Ausführungsform weist der linke Adapterring 13 eine Nut entlang der inneren Umfangsoberfläche auf, die genau zu einer Nut entlang der äußeren Umfangsfläche der Nabenachse ausgerichtet ist. Ein O-Ring aus elastischem Material in beiden Nuten angeordnet bewirkt einerseits, daß der Adapterring ohne Einsatz von Werkzeug mit der Hand von der Nabenachse abgezogen werden kann und andererseits, daß sich der Adapterring nicht ungewollt von der Nabenachse löst oder auf dieser veschiebt.

In der hier dargestellten Ausgestaltung ist eine Demontage der Nabe zu Wartungszwecken nach Entfernen der Riffel- oder Rändelscheiben 17 ohne weiteren Einsatz von Werkzeug möglich.

Am rechten Ende des Nabengehäuses 1 ist eine Nut 37 entlang der Innenumfangsoberfläche des Nabengehäuses angeordnet, welche in dem in Figur 1 dargestellten Schnitt eine abgerundete Form aufweist. Auf einer Außenoberfläche des Rotors ist ein ebenfalls V-förmiger Dichtungsring 9 angeordnet. Die Öffnung des V des Dichtrings 9 ist axial ausgerichtet und weist von der Nabenmitte weg.

Die Nut 37 und der Dichtring 9 sind derart gestaltet, daß nur ein enger Spalt zwischen Nabengehäuse 1 und Rotor 5 verbleibt. Bei Eintritt von z. B. Wasser durch diesen schmalen Spalt wird die radial nach außen weisende Dichtwandung der V-förmigen Dichtung 9 nach radial nach außen und somit gegen die umlaufende Nut 37 gedrückt. Dies bedeutet, daß bei Eintritt von Wasser oder auch Staub die Dichtungswirkung des Dichtrings 9 automatisch verstärkt wird, da ein Eintritt von Wasser eine Spreizung der beiden Dichtwandungen des Dichtrings 9 bewirkt und somit eine verstärkte Dichtwirkung.

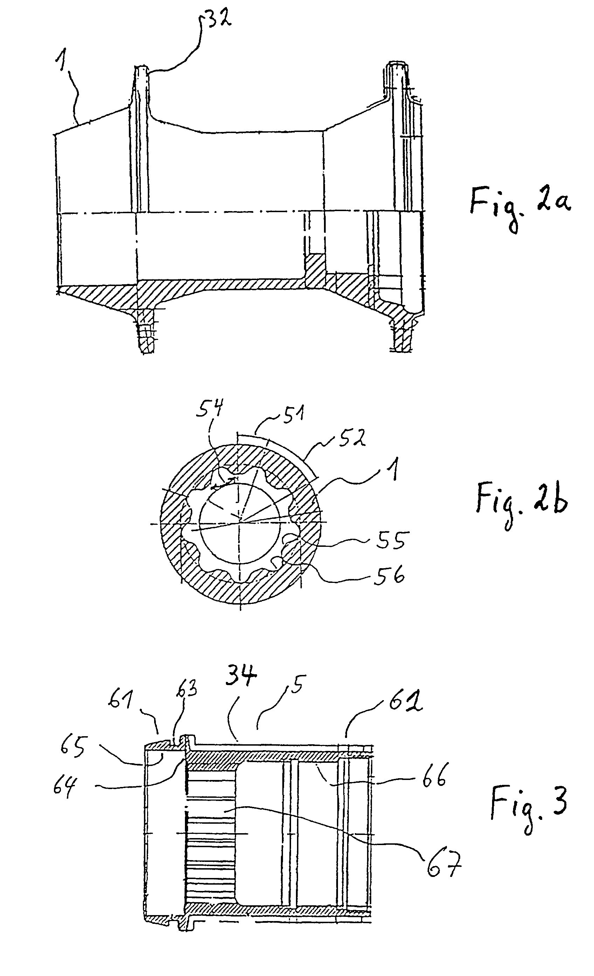

In Figur 2a ist das Nabengehäuse 1 in der oberen Hälfte normal und in der unteren Hälfte im Schnitt dargestellt.

In Figur 2b ist ein Querschnitt des Nabengehäuses an dem Absatz 38 dargestellt. Die zentrale, durch das Nabengehäuse durchgehende Öffnung weist in dem Bereich des Absatzes 38 ein polygonartig geformtes Innenprofil auf, bei welchem über den Umfang symmetrisch neun Vorsprünge 55 und Ausbuchtungen 56 in radialer Richtung angeordnet sind. Der Winkel 52 von einer zur nächsten Ausbuchtung beträgt 40°, und der Winkel 51 zwischen einer Ausbuchtung und dem nächsten Vorsprung 20°. Der Winkel 54 zwischen zwei Steigungsflanken einer Ausbuchtung beträgt 50°.

In Figur 3 ist ein Längsschnitt des Rotors 5 des Ausführungsbeispiels nach Figur 1 dargestellt. An einem linken Endbereich 61 weist der Rotor eine außen umlaufende Nut 63 auf, die zur Aufnahme des Dichtungsrings 9 dient, um den Dichtungsring 9 axial zu fixieren.

Am linken Endbereich 61 ist ein Lagersitz 65 auf der Innenumfangsoberfläche angeordnet, welcher zur Aufnahme der Rillenkugellager 31 zur Lagerung des Rotors in bezug auf den Klinkenträger bzw. das Nabengehäuse dient. Axial nach rechts werden die Rillenkugellager 31 durch einen radialen Absatz fixiert.

Auf der äußeren Umfangsoberfläche ist ein Ritzelaufnahmebereich 34 zur Aufnahme von mehreren, bis zu 10, Ritzeln vorgesehen. Nahe dem rechten Endbereich 62 ist auf einer Innenumfangsoberfläche ein Lagersitz 66 vorgesehen, welcher zur Aufnahme des Rillenkugellagers 2 zur Lagerung des Rotors in bezug auf die Nabenachse dient.

Auf einer Innenumfangsoberfläche sind axiale Nuten 67 nahe dem linken Endbereich 61 symmetrisch über den Umfang verteilt angeordnet, in welche die Sperrklinken 23 des Sperrklinkenträgers 22 eingreifen, um ein Drehmoment des Rotors in Fahrtrichtung auf das Nabengehäuse zu übertragen.

In Figur 4a ist ein Längsschnitt des Klinkenträgers 22 dargestellt, auf welchem Sperrklinken 23 angeordnet sind. Eine Nut 71 dient zur Aufnahme der Ringfeder 24, welche die Sperrklinken in Eingriffsrichtung vorspannt und welche die Sperrklinken und den Sperrklinkenträger mit einem Winkel von mehr als 360° umschließt. Eine solche Ausgestaltung hat den Vorteil, daß nach Entfernen des Rotors die Sperrklinken 23 auf dem Sperrklinkenträger 22 durch die Feder 24 gehalten werden und somit auch bei einer Demontage der Nabe das zufällige Herausfallen von einzelnen Komponenten und Teilen unterbleibt.

Auf einer äußeren Oberfläche 73 in einem zentralen Bereich des Sperrklinkenträgers werden die Rillenkugellager 31 zur Lagerung des Rotors in bezug auf den Sperrklinkenträger montiert. Zur axialen Fixierung der zwei Rillenkugellager 31 nach links dient ein radialer Ringvorsprung 72, welcher an den Lageraufnahmebereich 73 angrenzt. Im bestimmungsgemäßen Zusammenbau der erfindungsgemäßen Nabe ragt die Nabenachse 4 durch die zentrale Bohrung 76 des Sperrklinkenträgers durch. An einem linken Endbereich des Sperrklinkenträgers ist ein Innengewinde 77 vorgesehen, in welches die Schraube 29 geschraubt wird, um den Sperrklinkenträger mit dem Nabengehäuse 1 zu verbinden. Auf der Außenoberfläche ist am linken Ende des Sperrklinkenträgers 22 ein Polygonbereich 70 vorgesehen.

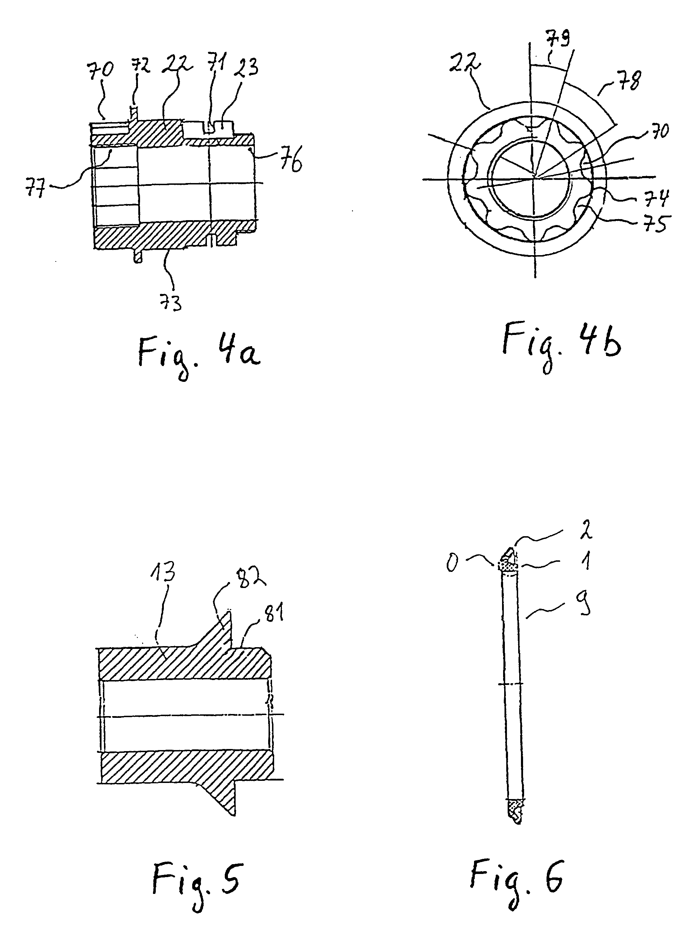

In Figur 4b ist eine Seitenansicht des Sperrklinkenträgers 22 mit dem Polygonbereich 70 dargestellt. In Umfangsrichtung sind symmetrisch abwechselnd neun Vorsprünge 74 und neun Vertiefungen 75 angeordnet, wobei der Winkel 78 zwischen zwei radialen Vorsprüngen 74 etwa 40° beträgt und der Winkel 79 zwischen einer Vertiefung und dem folgenden Vorsprung 20° beträgt.

In Figur 5 ist ein linker Adapterring 13 dargestellt, welcher einen zylindrischen Bereich 81 zur Aufnahme der Dichtung 26 und einen radialen Vorsprung 82 aufweist. Die zur Nabenmitte ausgerichtete Flanke des radialen Vorsprungs 82 weist einen Winkel von 90° zur Nabenachse auf, während die nach außen ausgerichtete Flanke unter einem Winkel von 45° zur Nabenachse abfällt.

In Figur 6 ist der Dichtungsring 9 dargestellt, der V-förmig gestaltet ist und zwei Dichtwandungen bzw. Dichtlippen aufweist. Die erste Dichtwandung 91 liegt parallel zur Achse in der Nut 63 des Rotors 5, während die zweite Dichtwandung 92 der Dichtung 9 radial nach außen in Richtung auf die in Figur 1 dargestellte Nut 37 gerichtet ist.

### Bezugszeichenliste

- 1: Nabengehäuse
- 2: Rillenkugellager
- 3: Nabe
- 4: Nabenachse
- 5: Rotor
- 9: Dichtung
- 10: Scheibe
- 11: Distanzscheibe
- 12: rechter Adapterring
- 13: linker Adapterring
- 14: Staubkappe
- 17: Rändelscheibe
- 18: Dichtung
- 22: Sperrklinkenträger
- 23: Sperrklinke
- 24: Ringfeder
- 26: Dichtung
- 28: Lagerträger
- 29: Schraube
- 30: Rillenkugellager
- 31: Rillenkugellager
- 32: Flansch
- 33: Bohrung
- 34: Aufnahmefläche für Zahnkränze
- 35: Absatz
- 36: Absatz
- 37: Nut
- 38: Absatz
- 39: Lagersitz
- 51: Winkel
- 52: Winkel
- 54: Winkel
- 55: Vorsprung
- 56: Ausbuchtung
- 61: Endbereich
- 62: Endbereich
- 63: Nut
- 64: Absatz
- 65: Lagersitz
- 66: Lagersitz
- 67: Nut
- 70: Polygonbereich
- 71: Nut
- 72: Ringvorsprung
- 73: Lageraufnahmebereich
- 74: Vorsprung
- 75: Vertiefung
- 76: Bohrung
- 77: Innengewinde
- 78: Winkel
- 79: Winkel
- 80: Dichtring
- 81: zylindrischer Bereich
- 82: radialer Vorsprung
- 91: erste Dichtwandung
- 92: zweite Dichtwandung

## Patentansprüche

1. Nabe, insbesondere für Fahrräder und dergleichen, mit:
einer Nabenachse (4),
einem im wesentlichen konzentrisch zu dieser Nabenachse angeordnetem Nabengehäuse (1),
wenigstens einem Wälzlager (2, 30) zur Lagerung dieses Nabengehäuses, so daß dieses Nabengehäuse in bezug auf diese Nabenachse drehbar gelagert ist,
einem im wesentlichen konzentrisch zu dieser Nabenachse und drehbar zu dieser angeordneten Rotor (5), an welchem wenigstens ein Zahnrad anzuordnen ist,
wobei an diesem Rotor (5) wenigstens ein Wälzlager (31) angeordnet ist, durch welches dieser Rotor gegenüber diesem Nabengehäuse in wenigstens einer Drehrichtung drehbar gelagert ist,
einer mit Sperrklinken versehenen Freilaufeinrichtung (23), welche derart gestaltet ist, daß ein Drehmoment dieses Rotors in Fahrtrichtung auf dieses Nabengehäuse übertragen wird,
wobei diese Wälzlager (2, 30) jeweils in einem vorbestimmten Abstand zueinander angeordnete Wälzkörper aufweisen und vorzugsweise handelsübliche Wälzlager sind,
**dadurch gekennzeichnet,**
**daß** dieser Rotor (5) gegenüber diesem Nabengehäuse (1) mit wenigstens zwei Rillenkugellagern (31) oder wenigstens einem Nadellager drehbar gelagert ist.

2. Nabe nach mindestens einem der vorhergehenden Ansprüche, **dadurch gekennzeichnet,**
**daß** diese Wälzkörper jedes Wälzlagers durch einen Wälzkörperkäfig in diesem vorbestimmten Abstand gehalten werden.

3. Nabe, nach Anspruch 1 oder 2, **dadurch gekennzeichnet,**
**daß** wenigstens eines dieser Wälzlager wartungsfrei ist und Dichtungen zum Schutz vor Staub und / oder Wasser aufweist.

4. Nabe nach mindestens einem der vorhergehenden Ansprüche, **dadurch gekennzeichnet,**
**daß** wenigstens eines dieser Wälzlager ein Rillenkugellager ist.

5. Nabe nach mindestens einem der vorhergehenden Ansprüche, **dadurch gekennzeichnet,**
**daß** dieser Rotor gegenüber diesem Nabengehäuse mit wenigstens zwei Rillenkugellagern oder wenigstens einem Nadellagern drehbar gelagert ist, wobei jedes dieses wenigstens einen Wälzlagers nur einen Wälzkörperkäfig ohne Innen- oder Außenkranz auf weist, um die Bauhöhe in radialer Richtung klein zu halten.

6. Nabe nach mindestens einem der vorhergehenden Ansprüche, **dadurch gekennzeichnet,**
**daß** eine Freilaufträger-Einrichtung vorgesehen ist, die mit diesem Nabengehäuse fest verbunden ist.

7. Nabe nach mindestens einem der vorhergehenden Ansprüche, **dadurch gekennzeichnet,**
**daß** auf einem zentralen Abschnitt dieser Freilaufträger-Einrichtung in Umfangsrichtung verteilt wenigstens eine, vorzugsweise zwei, drei oder vier Sperrklinken angeordnet sind.

8. Nabe nach mindestens einem der vorhergehenden Ansprüche, **dadurch gekennzeichnet,**
**daß** dieser zentrale Abschnitt eine Nut aufweist, in welcher eine Feder angeordnet ist, welche diese wenigstens eine Sperrklinke belastet.

9. Nabe nach mindestens einem der vorhergehenden Ansprüche, **dadurch gekennzeichnet,**
**daß** diese Feder diese Freilaufträger-Einrichtung mit einem Winkel größer 360° umschließt.

10. Nabe nach mindestens einem der vorhergehenden Ansprüche, **dadurch gekennzeichnet,**
**daß** dieser Nabe im wesentlichen ohne Verwendung von Werkzeug zerlegbar ist und / oder daß dieser Rotor mit der Hand von dieser Nabe abziehbar ist.

11. Nabe nach mindestens einem der vorhergehenden Ansprüche, **dadurch gekennzeichnet,**
**daß** im wesentlichen keine Teile, wie z.B. diese Sperrklinken oder Wälzkörper von Wälzlagern, nach Abziehen dieses Rotors aus dieser Nabe herausfallen.

12. Nabe nach mindestens einem der vorhergehenden Ansprüche, **dadurch gekennzeichnet,**
**daß** auf einer linken bzw. rechten Seite dieses Nabengehäuses ein linker bzw. rechter Adapterring an dieser Nabenachse angeordnet ist, welcher aufgeschraubt oder aufgeschoben sein kann, und welcher wenigstens eine Dichtungseinrichtung aufweist.

13. Nabe nach mindestens einem der vorhergehenden Ansprüche, **dadurch gekennzeichnet,**
**daß** an einer rechten Endseite dieses Nabengehäuses, auf der Seite, an welcher dieser Rotor angeordnet ist, entlang der Innenumfangsoberfläche dieses Nabengehäuse eine ringförmige Vertiefung mit vorzugsweise abgerundetem Querschnitt angeordnet ist.

14. Nabe nach Anspruch 13, **dadurch gekennzeichnet,**
**daß** eine Dichtungseinrichtung im wesentlichen zwischen diesem Rotor und diesem Nabengehäuse in einem Bereich dieser ringförmigen Vertiefung angeordnet ist und derart gestaltet ist, daß eine Druckerhöhung von außen, wie z.B. durch Spritzwasser hervorgerufen, die Wirkung dieser Dichtungseinrichtung verstärkt.

15. Nabe nach mindestens einem der vorhergehenden Ansprüche, **dadurch gekennzeichnet,**
**daß** diese im wesentlichen zwischen diesem Rotor und diesem Nabengehäuse angeordnete Dichtungseinrichtung V-förmig gestaltet und derart angeordnet ist, daß die Spitze des V's dieser V-förmigen Dichtungseinrichtung zu einer Mitte dieser Nabe ausgerichtet ist.

16. Nabe nach mindestens einem der vorhergehenden Ansprüche, **dadurch gekennzeichnet,**
**daß** eine erste Dichtwandung dieser im wesentlichen zwischen diesem Rotor und diesem Nabengehäuse angeordneten V-förmigen Dichtungseinrichtung im wesentlichen auf diesem Rotor anliegt, und daß die zweite Dichtwandung in diese ringförmige Vertiefung hineinragt und diese ringförmige Vertiefung berühren kann.

17. Nabe nach mindestens einem der vorhergehenden Ansprüche, **dadurch gekennzeichnet,**
**daß** wenigstens einer dieser Dichtungseinrichtungen wenigstens eine Labyrinthdichtung umfaßt.

18. Laufrad, insbesondere für Fahrräder und dergleichen, mit einer Nabe gemäß wenigstens einem der Ansprüche 1 bis 17.

19. Mehrrad, vorzugsweise Zweirad, vorzugsweise Fahrrad, mit wenigstens einer Nabe gemäß wenigstens einem der Ansprüche 1 bis 17.

## Claims

1. A hub, in particular for bicycles and the like, comprising:
a hub axis (4),
a hub shell (1) disposed substantially concentrically to said hub axis,
at least one roller bearing (2, 30) to support said hub shell so that said hub shell is pivotally mounted relative to said hub axis;
a rotor (5) arranged substantially concentrically to said hub axis and pivotally mounted relative to the hub axis, on which at least one gear wheel is arranged,
with at least one roller bearing (31) being arranged on said rotor (5), through which said rotor is pivotally mounted relative to said hub shell in at least one rotational direction,
a freewheel means (23) provided with pawls, being configured such that a torque of said rotor is transferred in the travel direction to said hub shell,
wherein said roller bearings (2, 30) respectively comprise roller bodies arranged in a predetermined distance from each other, and are preferably commercial roller bearings,
**characterized in that**
said rotor (5) is pivotally mounted relative to said hub shell (1) by at least two groove ball bearings (31) or at least one needle bearing.

2. The hub according to at least one of the preceding claims, wherein said roller bodies of each roller bearing are kept at a predetermined distance by a roller body cage.

3. The hub according to claim 1 or 2, wherein at least one of said roller bearings is maintenance-free and comprises seals for protection against dust and/or water.

4. The hub according to at least one of the preceding claims, wherein at least one of said roller bearings is a groove ball bearing.

5. The hub according to at least one of the preceding claims, wherein said rotor is pivotally mounted relative to said hub shell by at least two groove ball bearings or at least one needle bearing, wherein each of said at least one roller bearing comprise only one roller body cage without inner or outer race so as to keep the constructional height low in the radial direction.

6. The hub according to at least one of the preceding claims, wherein a freewheel carrier means is provided that is fixed to said hub shell.

7. The hub according to at least one of the preceding claims, wherein on a central portion of said freewheel carrier means at least one, preferably two, three or four pawls are arranged, distributed in the circumferential direction.

8. The hub according to at least one of the preceding claims, wherein said central portion comprises a groove in which a spring is arranged biasing said at least one pawl.

9. The hub according to at least one of the preceding claims, wherein said spring surrounds said freewheel carrier means at an angle larger than 360°.

10. The hub according to at least one of the preceding claims, wherein said hub is detachably substantially without using tools and/or said rotor is manually removable from said hub.

11. The hub according to at least one of the preceding claims, wherein substantially no parts, such as, for example, said pawls or roller bodies of roller bearings, fall out from said hub after removing said rotor.

12. The hub according to at least one of the preceding claims, wherein on a left and right side of said hub shell, respectively, a left and right adapter ring, respectively, is arranged on said hub axis, which may be threaded on or slid on, and which comprises at least one sealing means.

13. The hub according to at least one of the preceding claims, wherein on a right end side of the hub shell, on that side comprising said rotor, an annular recess having a preferably rounded cross-section is arranged along the inner circumferential surface of said hub shell.

14. The hub according to claim 13, wherein a sealing means is arranged substantially between said rotor and said hub shell in a portion of said annular recess, and is configured such that a pressure increase from outside, such as caused by splash water and the like, increases the effect of said sealing means.

15. The hub according to at least one of the preceding claims, wherein said sealing means substantially is formed V-like and is arranged such that the tip of the V of said V-shaped sealing means is directed towards the center of said hub.

16. The hub according to at least one of the preceding claims, wherein a first sealing wall of said V-shaped sealing means is arranged substantially between said rotor and said hub shell, substantially arranged close to said rotor, and that the second sealing means protrudes into said annular recess and is able to touch said annular recess.

17. The hub according to at least one of the preceding claims, wherein at least one of said sealing means comprises at least a labyrinth seal.

18. A wheel, in particular for bicycles and the like, comprising a hub according to at least one of the claims 1 to 17.

19. Multiple-wheel device, preferably two-wheel device, preferably bicycle, comprising at least one hub according to at least one of the claims 1 to 17.

## Revendications

1. Moyeu, en particulier pour bicyclettes ou semblables, comprenant:
un axe de moyeu (4),
un boîtier de moyeu (1) essentiellement concentrique audit axe de moyeu,
au moins un roulement à rouleaux (2, 30) pour loger ledit boîtier de moyeu, si bien que ledit boîtier de moyeu, par rapport audit axe de moyeu, est logé de manière rotative,
un rotor (5) disposé essentiellement concentrique audit axe de moyeu et de manière rotative par rapport à celui-ci, auquel au moins une roue dentée est à disposer,
au moins un roulement à rouleaux (31) étant disposé audit rotor (5), par lequel ledit rotor est logé de manière rotative au moins dans un sens de rotation par rapport audit boîtier de moyeu,
un dispositif de roue libre (23) pourvu de cliquets d'arrêt, conçu de manière telle qu'un couple de rotation dudit rotor dans le sens de la marche est transmis audit boîtier de moyeu, lesdits roulements à rouleaux (2, 30) comprenant chaque fois des corps de rouleau disposés en un espacement défini et étant, de manière préférée, des roulements à rouleaux courants du commerce,
**caractérisé en ce que**
ledit rotor (5) est logé de manière rotative par rapport audit boîtier de moyeu (1) au moyen d'au moins deux roulements rainurés à billes (31) ou, d'au moins, un roulement à aiguilles.

2. Moyeu selon la revendication 1,
**caractérisé en ce que**
lesdits corps de rouleau de chacun desdits roulements à rouleaux sont maintenus audit écartement défini par une cage de corps de rouleau.

3. Moyeu selon la revendication 1 ou 2,
**caractérisé en ce que**
au moins l'un desdits roulements à rouleaux ne nécessite aucun entretien et présente des joints d'étanchéité de protection contre la poussière et/ou l'eau.

4. Moyeu selon au moins l'une des revendications précédentes,
**caractérisé en ce que**
au moins un desdits roulements à rouleaux est un roulement rainuré à billes.

5. Moyeu selon au moins l'une des revendications précédentes,
**caractérisé en ce que**
ledit rotor est logé de manière rotative par rapport audit boîtier de moyeu par au moins deux roulements rainurés à billes ou, au moins, un roulement à aiguilles, chacun desdits au moins un roulement à rouleau ne comprend qu'une seule cage de corps de rouleau sans bague de roulement intérieure ou extérieure pour maintenir faible la cote d'encombrement dans le sens radial.

6. Moyeu selon au moins l'une des revendications précédentes,
**caractérisé en ce que**
un dispositif de retenue de roue libre est prévu qui est relié de manière fixe audit boîtier de moyeu.

7. Moyeu selon au moins l'une des revendications précédentes,
**caractérisé en ce que**
sur une section centrale dudit dispositif de retenue de roue libre, réparti en direction du périmètre, au moins un, de manière préférée deux, trois ou quatre cliquets d'arrêt sont disposés.

8. Moyeu selon au moins l'une des revendications précédentes,
**caractérisé en ce que**
ladite section centrale présente une rainure dans laquelle un ressort est disposé qui charge ledit au moins un cliquet.

9. Moyeu selon au moins l'une des revendications précédentes,
**caractérisé en ce que**
ledit ressort entoure ledit dispositif de retenue de roue libre sur un angle de plus de 360 °.

10. Moyeu selon au moins l'une des revendications précédentes,
**caractérisé en ce que**
ledit moyeu est, pour l'essentiel, démontable sans utiliser d'outils et/ou que ledit rotor peut se dégager à la main dudit moyeu.

11. Moyeu selon au moins l'une des revendications précédentes,
**caractérisé en ce que**
pour l'essentiel, aucune pièce, telle comme, par exemple, lesdits cliquets d'arrêt ou des corps de rouleau de roulement à rouleau, après dégagement dudit rotor, ne tombent hors dudit moyeu.

12. Moyeu selon au moins l'une des revendications précédentes,
**caractérisé en ce que**
sur un côté gauche ou droit dudit boîtier de moyeu, une bague d'adaptation gauche ou droite est disposée audit axe de moyeu, pouvant être vissée ou glissée sur celui-ci et qui comprend au moins un dispositif d'étanchéité.

13. Moyeu selon au moins l'une des revendications précédentes,
**caractérisé en ce que**
en une extrémité droite dudit boîtier de moyeu, du côté où ledit rotor est disposé, le long d'une surface de périmètre intérieure dudit boîtier de moyeu, est disposé un creux de forme annulaire, de manière préférée, de section arrondie.

14. Moyeu selon la revendication 13,
**caractérisé en ce que**
un dispositif d'étanchéité, essentiellement entre ledit rotor et ledit boîtier de moyeu, est disposé dans une zone dudit creux de forme annulaire, et est conformé de manière telle qu'une augmentation de la pression de l'extérieur, telle celle qui, par exemple, découle de projections d'eau, renforce l'effet dudit dispositif d'étanchéité.

15. Moyeu selon au moins l'une des revendications précédentes,
**caractérisé en ce que**
ledit dispositif d'étanchéité disposé essentiellement entre ledit rotor et ledit boîtier de moyeu, est en forme de V et disposé de manière telle que la pointe du V dudit dispositif d'étanchéité en forme de V est alignée vers un milieu dudit moyeu.

16. Moyeu selon au moins l'une des revendications précédentes,
**caractérisé en ce que**
une première paroi d'étanchéité dudit dispositif d'étanchéité en forme de V disposé essentiellement entre ledit rotor et ledit boîtier de moyeu, est essentiellement apposée audit rotor et que ladite deuxième paroi d'étanchéité dépasse dans ledit creux annulaire et peut toucher ledit creux annulaire.

17. Moyeu selon au moins l'une des revendications précédentes,
**caractérisé en ce que**
au moins un desdits dispositifs d'étanchéité comprend au moins un joint à labyrinthe.

18. Roue de roulement, en particulier pour bicyclettes ou semblables, équipée d'un moyeu selon au moins l'une des revendications 1 à 17.

19. Véhicule à plusieurs roues, de manière préférée, à deux roues, de manière préférée, bicyclette, comportant au moins un moyeu selon au moins l'une des revendications 1 à 17.
